# NEW EUROPEAN PATENT SPECIFICATION

(11) **EP 3 219 572 B2**
(45) Date of publication and mention of the opposition decision: **24.01.2024**
(45) Mention of the grant of the patent: 26.09.2018
(21) Application number: 16160401.2
(22) Date of filing: 15.03.2016
(51) Int. Cl.: B61L 3/00, B60L 15/20

(54) **METHOD OF PROVIDING A DRIVING RECOMMENDATION TO A DRIVER OF A TRAIN AND TRAIN DRIVER ADVISORY SYSTEM**
VERFAHREN ZUR BEREITSTELLUNG EINER FAHREMPFEHLUNG FÜR EINEN FÜHRER EINES ZUGES UND ZUGFÜHRERBERATUNGSSYSTEM
PROCÉDÉ DE FOURNITURE D'UNE RECOMMANDATION DE CONDUITE D'UN CONDUCTEUR D'UN TRAIN ET SYSTÈME DE CONSEIL POUR CONDUCTEUR DE TRAIN

(43) Date of publication of application: 20.09.2017
(73) Proprietor: KNORR-BREMSE Systeme für Schienenfahrzeuge GmbH, 80809 München (DE)
(72) Inventor: Komlosi, Istvan, 4225 Debrecen (HU); Csuros, Csaba, 1091 Budapest (HU); Madaras, Attila, 1024 Budapest (HU); Mathe, Sandor, 1188 Budapest (HU)
(74) Representative: Prüfer & Partner mbB Patentanwälte · Rechtsanwälte

(56) References cited:
- EP-A1- 1 466 803
- EP-A1- 2 955 483
- EP-A1- 3 219 572
- WO-A1-01/08956
- WO-A1-2011/060122
- WO-A1-2013/160327
- DE-A1-102013 217 310
- US-A1- 2007 219 680
- US-A1- 2010 023 190
- US-A1- 2011 288 765
- ULRICH LINDER: "Optimierung von Fahrweisen im spurgeführten Verkehr und deren Umsetzung", Dissertation, 26 April 2004 (2004-04-26), pages 1-241, Berlin
- Steffen Oettich: "Die flexible S-Bahn: Energiesparende und anschlussoptimierende Flexibilisierung der Fahrweisen und Fahrzeiten- Das neuartige Fahrerassistenzsystem ENAflex-S,", Die flexible S-Bahn Steffen Oettich, vol. 6, 31 January 2005 (2005-01-31),

## Description

The present invention relates to the control of trains. In particular, it relates to train driver systems that provide driving recommendations to the driver, and to methods of generating such driving recommendations and providing the same to the driver.

In general, trains need large amounts of energy for being operated. With fossil fuels being a scarce resource, it is desirable to run fuel-powered trains in an energy-efficient manner. Also, energy-efficient operation allows for the train to carry less fuel, which in turn reduces the weight of the train and leads to an even more energy-efficient operation. With respect to electrically powered trains, it is also desirable to operate the trains in an energy-efficient manner. With the electrical energy generally stemming partly from fossil fuels and with trains needing electrical power in many different, potentially remote, locations along the tracks, which puts a significant strain on electric distribution networks, an energy-efficient operation is highly desirable. Various approaches have been made to operate trains in energy-efficient ways. However, previous approaches have not been satisfactory in finding optimized operating regimes during operation of the train.

WO 2013/160327 A1 discloses a method for generating action recommendations for the driver of a rail vehicle or control signals for the rail vehicle by means of a driver assistance system in which, taking at least one journey specification into account, driving data is calculated and on the basis of the driving data: an action recommendation is generated and displayed in an action recommendation display device or - a control signal that acts on a vehicle control device is generated. In order to optimise such a method in relation to an energy requirement of the rail vehicle, at least one air pressure characteristic variable is taken into account as a journey specification.

EP 1 466 803 A1 discloses a method that involves specifying a speed depending on a bend and possibly lateness relative to a travel plan. Travel time reserves are defined for route sections in relation to a maximum permissible section speed. The train location according to the travel plan is determined using the plan and current time. The speed to be defined is computed from the bend applicable to this location and the current lateness taking into account the travel time reserve.
Furthermore, the doctoral thesis by Ulrich Linder "Optimierung von Fahrweisen im spurgeführten Verkehr und deren Umsetzung", published in 2004, discloses the realization of theoretically determined running profiles in operation by advice systems, wherein the optimization leads to energy-economical running profiles.

Accordingly, it would be beneficial to provide an improved train driver advisory system and an improved method of providing a driving recommendation to a driver of a train that allow for an optimized operating regime of the train during the operation thereof.

Exemplary embodiments of the invention include a method of providing a driving recommendation to a driver of a train in accordance with claim 1 and a train driver advisory system in accordance with claim 11. Further embodiments are given in the dependent claims.

Exemplary embodiments of the invention include a method of providing a driving recommendation to a driver of a train during operation of the train, the driving recommendation being based on a distance and an altitude profile of a trip segment to be covered by the train, a travel time limit for the trip segment, and velocity limits along the trip segment. The method comprises the steps of defining an initial state of the train on the basis of an actual position of the train and an actual velocity of the train, defining a goal state of the train on the basis of a goal position and a goal velocity at the end of the trip segment to be covered by the train, determining an energy-optimized velocity profile between the initial state of the train and the goal state of the train, with the energy-optimized velocity profile being determined by a graph based optimization algorithm, constrained by the travel time limit for the trip segment and the velocity limits along the trip segment, providing the driving recommendation to the driver on the basis of the energy-optimized velocity profile.

Exemplary embodiments of the invention allow for an efficient manner of determining an energy-optimized velocity profile for a trip segment, reaching from an actual position of the train to a goal position of the train, that allows for being carried out in a real time manner during operation of the train and that allows for the provision of an energy-optimized velocity profile that is adapted to the current position and operation of the train. The determination of the energy-optimized velocity profile by a graph based optimization algorithm allows for deterministically finding an optimized minimum energy velocity profile, constrained by the travel time limit and the velocity limits, which allows for being carried out in real time during the traveling along the trip segment due to its low computational and memory intensities. Moreover, using a graph based optimization algorithm allows for a favorable compromise between the accuracy of the energy-optimized velocity profile, i.e. the deviation from the absolute minimum energy consumption velocity profile, and the speed of determining the energy-optimized velocity profile and the speed of re-planning / adapting the energy-optimized velocity profile throughout the trip. Yet further, the graph based optimization algorithm is robust, has a deterministic behavior and has completeness in finding the energy-optimized velocity profile, if an energy-optimized solution exists. As the initial and goal states may be defined quite freely, the method is very flexible and adaptable to changing situations in real time. Providing a driving recommendation to the driver on the basis of this energy-optimized velocity profile enables the driver of the train to adopt the result of the graph based optimization algorithm, e.g. via adopting the driving recommendation for the momentary velocity of the train, thus enabling energy-optimized operation of the train for the given trip segment.

The term energy-optimized velocity profile refers to a velocity profile that is optimized with respect to the energy consumption of the train, i.e. it refers to a velocity profile with minimized energy consumption. With the graph based optimization algorithm being constrained by the travel time limit for the trip segment and the velocity limits along the trip segment, the energy-optimized velocity profile has a minimized energy consumption, while observing the travel time limit and velocity limit constraints. In particular, the energy-optimized velocity profile may be the velocity profile with optimal minimum energy consumption for a particular resolution of the graph based optimization algorithm. The method may be used for minimizing the fuel consumption as well as for minimizing the consumption of electrical energy, depending on the type of train.

The term train, as used herein, includes any type of railway vehicle, such as long distance passenger or freight trains, shorter distance regional trains, suburban trains, metropolitan area underground trains, and inner-city tram trains. It also includes industrial railway vehicles, such as used in large industrial plants or mines. It further relates both to fuel-powered trains as well as electrically powered trains. Yet further, the term train encompasses trains having one locomotive, also referred to as traction drive unit of the train, or a plurality of locomotives. Further, the train may have any suitable number of wagons / rail cars, such as passenger cars or freight cars.

The term trip segment refers to a defined portion / section of a given trip to be undertaken by the train. The term trip segment may refer to a portion of the trip between two points of interest, such as between two stations or between two signals / switches or between a stop and a signal, etc. It may also refer to an arbitrarily defined portion of the trip, such as to the next 20 km, 50 km or 100 km of the trip, starting from the actual position of the train. The term trip segment may also refer to the whole trip for a given time interval, such as for a given day, e.g. to a trip from a start point in the morning to an end point in the evening, including multiple stops along the way.

The travel time limit may be any kind of required or desired maximum travel time for the trip segment. The travel time limit may be derived from the train schedule and/or from other factors, such as maximum travel times for the goods on a freight train or maximum transfer times for transferring a train between different assignments. The travel time limit is the time limit that is to be met by the driver of the train for the given trip segment.

The term velocity limits refers to the maximum velocity values that the driver is allowed to reach along the various parts of the trip segment. The velocity limits may be general velocity limits, e.g. due to railway crossings or noise regulations, as well as train-specific speed limits, e.g. defined with respect to particular turns and/or rail types and/or train types.

The trip segment is defined by a distance between the beginning of the trip segment and the end of the trip segment as well as an altitude profile along the trip segment. The trip segment may additionally be defined by other characteristics, such as rail types, weather conditions, etc. These other characteristics may result in additional constraints for the graph based optimization algorithm and/or may impact the graph based optimization algorithm in other ways, as will be explained below.

The graph based optimization algorithm may be an iterative optimization algorithm or a non-iterative optimization algorithm.

The initial state of the train may be a two-variable state, consisting of the actual position of the train and the actual velocity of the train. The initial state may also comprise one or more further variables, such as an actual accelerating / braking value. It is also possible that the initial state is defined by a pre-calculated position of the train and a pre-calculated velocity of the train, taking into account the actual position of the train and the actual velocity of the train and, potentially, the actual accelerating / braking value of the train. In this way, the initial state may be an estimate of the position and velocity of the train at the end of the step of determining the energy-optimized velocity profile. Analogously, the goal state of the train may consist of the two variables of the goal position and the goal velocity of the train. For example, when the goal position is a particular station along the trip, the goal position may be the location of the station and the goal velocity may be zero. It is also possible that the goal position and the goal velocity may be arbitrarily defined values, such as a location 100 km removed from the actual position of the train and the velocity limit at the position 100 km removed from the actual position of the train. While the goal state of the train is well-defined for the determination of the energy-optimized velocity profile by the graph based optimization algorithm, the goal state of the train can be defined freely within the operational limits of the train. The goal state of the train may also comprise one or more further variables.

The driving recommendation may be adoptable by the driver. In other words, the method may provide a driver-adoptable driving recommendation to the driver of the train. In particular, it is possible that the driver may accept the driving recommendation, e.g. by pressing an accept button, with the driving recommendation then directly impacting the control of the train. It is also possible that the driving recommendation is output to the driver via suitable means, such as a display for a visual indication of the driving recommendation and/or a loudspeaker for an audible output of the driving recommendation, with the driver than manually operating the control of the train in accordance with the driving recommendation. Accordingly, the driver of the train is able to adopt the driving recommendation and to control the train accordingly, while maintaining final control over the driving of the train.

According to a further embodiment, the driving recommendation comprises a train velocity recommendation derived from the energy-optimized velocity profile and the actual position of the train. In particular, the train velocity recommendation may be the velocity value of the energy-optimized velocity profile, given for the actual position of the train. When the train is in motion, the driving recommendation may be adjusted in accordance with the changing actual position of the train. In this way, the driver is provided with a target velocity value that he/she may achieve by controlling the train in a suitable manner.

In addition/alternatively, the driving recommendation may comprise an acceleration recommendation, derived from the energy-optimized velocity profile, the actual velocity of the train and the actual position of the train, with the acceleration recommendation recommending one of an accelerating, a braking, and a maintaining of the velocity of the train. It is also possible that the acceleration recommendation recommends a coasting of the train. Accordingly, it is possible that the acceleration recommendation recommends one of an accelerating, a braking, a coasting, and a maintaining of the velocity of the train. In particular, the acceleration recommendation may be derived from a deviation between the velocity value of the energy-optimized velocity profile for the actual position of the train and the actual velocity of the train. It is also possible that the acceleration recommendation recommends one of different levels for accelerating / braking. The term coasting refers to not applying any active accelerating or braking, with the velocity of the train potentially changing due to factors such as the altitude profile, friction on the tracks, and aerodynamic drag. Keeping the velocity of the train refers to applying a suitable amount of accelerating / braking in order to maintain the velocity of the train despite factors such as the altitude profile, friction on the tracks, and aerodynamic drag. Providing an acceleration recommendation allows for the driver to immediately realize the recommendation, without having to derive a suitable control action from a target velocity, leading to a generally quicker adoption of the driving recommendation. The driver may be provided with one of the train velocity recommendation and the acceleration recommendation or with both of the train velocity recommendation and the acceleration recommendation.

The step of determining the energy-optimized velocity profile between the initial state of the train and the goal state of the train by the graph based optimization algorithm comprises defining a grid of intermediate states between the initial state and the goal state; defining a plurality of grid edges between the initial state, the grid of intermediate states and the goal state, the plurality of grid edges forming a plurality of paths from the initial state to the goal state via the grid of intermediate states; for each of the plurality of grid edges, determining an energy consumption of the train and determining a required travel time of the train along the respective grid edge; and determining an energy-optimized path from the initial state to the goal state on the basis of the energy consumption of the train along the plurality of grid edges, with the required travel time along the grid edges of the energy-optimized path being within the travel time limit.

Determining the energy-optimized path along a subset of the plurality of grid edges, passing a respective subset of the plurality of intermediate states out of the grid of intermediate states, is an efficient implementation of a graph based optimization algorithm. By determining the energy consumption of the train and the required travel time of the train along each one of the plurality of grid edges, the basis for finding the energy-optimized path is generated. The transitions between the states of the train are associated with respective values for the energy consumption and for the required travel time, with the sums of these energy consumption values and required travel time values for the potential paths throughout the grid of intermediate states forming the variable to be optimized, namely the energy consumption, and the constrained variable, namely the required travel time.

The energy-optimized path forms the basis for the energy-optimized velocity profile, which in turn leads to the driving recommendation to the driver. In particular, the energy-optimized velocity profile may correspond to the energy-optimized path through the grid of the intermediate states and the associated selected grid edges, e.g. when the grid of intermediate states is in the distance velocity space. It is also possible that the energy-optimized velocity profile is derived from the energy-optimized path through the grid of intermediate states, e.g. by translating an energy-optimized path in a time velocity space into a location dependent energy-optimized velocity profile.

While the initial state of the train, the goal state of the train and the energy-optimized velocity profile are immediately related to the actual control and actual driving of the train, i.e. to the real world operation of the train, the grid of intermediate states and the plurality of grid edges are tools that jointly form a model of many different operating regimes, among which an optimal mode of operation, namely the energy-optimized path through the grid of intermediate states, can be determined. Accordingly, the real values of the initial state of the train and the goal state of the train are used for building a graph based model, which allows for finding an optimized path therethrough, which optimized path is then translated into the energy-optimized velocity profile, which is an actual velocity profile for the operation of the train and which forms the basis of the actual driving recommendation output to the driver.

All intermediate states may have a velocity value that is within the velocity limits along the trip segment. In other words, the train velocity at the intermediate states is below the velocity limits of the trip segment.

According to a further embodiment, each of the intermediate states is defined by a respective distance value and a respective train velocity value. In other words, each of the intermediate states may be seen as a point in a distance / velocity coordinate system. In this way, each of the intermediate states represents a potential velocity of the train at a given distance from the actual position of the train. The initial state of the train and the goal state of the train may also be seen as points in this distance / velocity coordinate system. This coordinate system may form the search space for the graph based optimization algorithm. This search space may be limited by the velocity limits along the trip segment. In this way, train velocities that are not feasible due to being over the velocity limits, are not considered for the determination of the energy-optimized path from the initial state to the goal state.

According to an alternative embodiment, each of the intermediate states is defined by a respective travel time value and a respective velocity value. In this way, the search space for the graph based optimization algorithm is a travel time / velocity space. It may be represented as a travel time / velocity coordinate system. It can also be said that the graph based optimization algorithm is carried out in a time velocity space, as compared to the distance velocity space, described above.

The grid of intermediate states is a regular grid of intermediate states. In other words, the points in the distance / velocity coordinate system or the travel time / velocity coordinate system, representing the intermediate states, may be regularly spaced. Using such a regular grid of intermediate states may be beneficial in terms of determining the energy-optimized path quickly, making the real time characteristics of the graph based optimization algorithm even better, and re-using energy consumption values and required travel time values along the respective grid edges in an efficient manner.
According to an embodiment not belonging to the present invention, it is also possible that the grid of intermediate states is an irregular grid of intermediate states, with the spacings between the intermediate states e.g. depending on easily realizable velocity changes of the train.

According to a further embodiment, the energy consumption of the train and the required travel time of the train along the plurality of grid edges are determined according to dynamic behavior characteristics of the train. The dynamic behavior characteristics of the train may depend on a variety of factors. Exemplary factors are the number of locomotives / traction drive units, the number of wagons, the weight of the individual locomotives and wagons, the power capacities of the engine(s) of the locomotive(s), the traction forces of the wheels on the rails, the type of brakes such as friction brakes and electro-dynamic recuperation brakes, the set-up and braking capacities of the brakes, the rail characteristics, the weather conditions, etc. On the basis of these and potentially other factors, each train has particular accelerating and braking capabilities as well as particular power requirements for accelerating / braking and, potentially, particular power recuperation capacities for braking. For accelerating and maintaining a constant velocity, energy is generally consumed, at least on even or uphill parts of the track. Depending on the brakes being used and the engine's capability of working as a generator, energy recuperation may take place during braking of the train, which energy recuperation may also be taken into account. The energy recuperation may be weighed with a recuperation factor, which may depend on the electricity network's capability of receiving recuperated energy and/or the recuperated energy reception limits of the network and/or local network operator prices for recuperated energy. On the basis of such factors, the energy consumption of the train and the required travel time of the train may be determined for each grid edge, i.e. for each connection of the initial state, the goal state and the plurality of intermediate states. In this way, the transitions between the states of the train, represented by grid edges in the graph based optimization algorithm, are assigned respective energy consumption and required travel time values, with these values reflecting the energy consumption and required travel time of the particular train for which a driving recommendation is provided. Accordingly, the energy consumption and required travel time values for the plurality of grid edges reflect the real world dynamic behavior characteristics of the train in question and, thus, ensure that the result of the graph based optimization algorithm is actually an energy-optimized velocity profile for the operation of the particular train.

According to a further embodiment, the grid of intermediate states is defined according to dynamic behavior characteristics of the train. In addition / alternatively, it is possible that the plurality of grid edges are defined according to dynamic behavior characteristics of the train. In other words, it is possible that the grid of intermediate states and/or the plurality of grid edges are defined in such a way that only possible intermediate states and/or grid edges are present for the graph based optimization algorithm. In particular, it is possible that only states and/or grid edges are present that reflect accelerations and decelerations that are possible with the train in question. In this way, the graph based optimization algorithm can be limited to feasible intermediate states and/or grid edges, enhancing the computational speed and real time capabilities even further.

According to a further embodiment, the step of determining an energy-optimized velocity profile between the initial state of the train and the goal state of the train is carried out in an iterative manner, with the grid of intermediate states of a particular iteration having a higher resolution than the grid of intermediate states of a previous iteration and with the grid of intermediate states of the particular iteration being defined around the energy-optimized path of the previous iteration. Determining the energy-optimized velocity profile in an iterative manner allows for a particularly quick determination of an energy optimal velocity profile for a given resolution or for an energy optimal velocity profile at a particular high resolution for a given computational time. In this way, the method may be even better adapted to the real time need for determining the energy-optimized velocity profile during operation of the train.

According to a further embodiment, the driving recommendation is additionally based on minimum velocity values along the trip segment, with the graph based optimization algorithm being constrained by the travel time limit for the trip segment, the velocity limits along the trip segment and the minimum velocity values along the trip segment. In this way, the search space for the graph based optimization algorithm may be narrowed and the computational time for finding the energy-optimized velocity profile may be reduced. The minimum velocity values may be determined in dependence of the respective velocity limits. For example, the minimum velocity value at a given point along the trip segment may be the velocity limit at the given point along the trip segment, multiplied by a predefined reduction factor. The minimum velocity values may also be based on dynamic behavior characteristics, such as train-specific minimum velocity constraints for turns or uphill portions, or railway network operator requirements. In this way, compliance with minimum velocity values, if applicable, may be embedded into the determining of the energy-optimized velocity profile.

According to a further embodiment, the method further comprises the step of low pass filtering the energy-optimized velocity profile, determined by the graph based optimization algorithm. In particular, the low pass filtering may filter out high frequency oscillations between accelerating and braking the train. In this way, a trade-off between energy optimization and other factors, such as passenger comfort, may be achieved.

According to a further embodiment, the graph based optimization algorithm is one of a CD* algorithm, an AD* algorithm, and a succession of a CD* algorithm and a AD* algorithm. The CD* and AD* algorithms, also referred to as Constrained D* and Anytime Dynamic A* algorithms, respectively, are particularly efficient graph based optimization algorithms that allow for a particularly efficient determination of the energy-optimized velocity profile, in particular for a particularly efficient determination of the energy-optimized path through the grid of intermediate states between the initial state and the goal state of the train. The details of the CD* algorithm may for example be found in Stentz: CD*: A Real-time Resolution Optimal Re-planner for Globally Constrained Problems, American Association for Artificial Intelligence, 2002, the full disclosure of which is incorporated herein by reference. The details of the AD* algorithm may for example be found in Likhachev et al.: Anytime Dynamic A*: An Anytime, Replanning Algorithm, American Association for Artificial Intelligence, 2005, the full disclosure of which is also incorporated herein by reference.

According to a further embodiment, the method is repeatedly carried out in regular intervals for providing updated driving recommendations to the driver of the train over time. For example, the method may be carried out every two minutes. In between the repeated executions of the method, the driving recommendation to the driver may be updated on the basis of the previous execution of the method and the changing actual position of the train. In addition / as an alternative, the method may be repeatedly carried out in response to respective start commands for providing updated driving recommendations to the driver of the train over time. For example, the driver may be enabled to issue a start command and to trigger the execution of the method upon leaving a station or upon accelerating the train after a temporary stop at a stop signal, etc. In addition / as an alternative, the method may be repeated when the velocity deviates from the energy-optimized velocity profile of the previous execution by a predetermined tolerance amount / percentage. When carrying out the method in a repeated manner, the goal state of the train may stay the same or may change over time. In other words, the trip segment of the method may be a part of the overall trip that continuously becomes shorter, or the trip segment may be a sliding window along the overall trip of the train. It is possible that above described CD* algorithm is used in the first execution of the method, while the AD* algorithm is used in the ensuing executions of the method. It is further possible that the CD* algorithm is used in regular intervals, such as in every 10th execution of the method, with the AD* algorithm being used in the other executions.

Exemplary embodiments of the inventions further include a method of setting a train velocity during operation, comprising the method of providing a driving recommendation to a driver of a train, as described in any of the embodiments above, and allowing the driver of the train to control the train velocity on the basis of the driving recommendation. In this way, the driver can adopt the driving recommendation and the final result of the method has an actual impact on the operation of the train. While the final control remains with the driver, the realization of the driving recommendation can be easily carried out. It is possible that the train driver controls the train velocity by a separate control unit of the train, i.e. by a control unit of the train that is separate from a train driver advisory system that provides the driving recommendation. However, it is also possible that the train driver can accept the driving recommendation, with the driving recommendation then being transmitted from the train driver advisory system to the control unit of the train without any further driver interaction.

Exemplary embodiments of the invention further include a train driver advisory system for providing driving recommendations to a driver of a train, the train driver advisory system comprising a memory for storing a distance and an altitude profile of at least one trip segment, at least one travel time limit for the at least one trip segment and velocity limits along the at least one trip segment; a position signal input for receiving position data, indicative of the position of the train, from a navigation satellite system; and a computation module, coupled to the memory and the position signal input and configured to carry out the method of providing a driving recommendation, as described in any of the embodiments above. The additional features, modifications, and benefits, described above with respect to the method of providing a driving recommendation to a driver of a train, equally apply to the train driver advisory system. The computation module may be a hardware component, such as an application specific electronic circuit, a software program to be run on a multiple purpose processor, or a combination of specific hardware and software components. The computation module and the memory may be part of an integrated system, such as a laptop computer, or may be separate components, coupled in a suitable manner for data exchange.

According to a further embodiment, the train driver advisory system further comprises a display for visually providing the driving recommendations to the driver of the train. In addition / alternatively, the train driver advisory system may further comprise a speaker for audibly providing the driving recommendations to the driver of the train.

Exemplary embodiments of the invention further include a train comprising a train driver advisory system, as described in any of the embodiments above. The additional features, modifications, and benefits, described above with respect to the train driver advisory system, equally apply to the train.

Further exemplary embodiments of the invention are described in detail below with reference with the accompanying figures.
Fig. 1 shows a schematic illustration of a train, equipped with a train driver advisory system in accordance with exemplary embodiments of the invention;
Fig. 2 shows a schematic illustration of another train, equipped with a train driver advisory system in accordance with exemplary embodiments of the invention;
Fig. 3 shows a schematic illustration of yet another train, equipped with a train driver advisory system in accordance with exemplary embodiments of the invention;
Fig. 4 depicts an illustration of a method of providing a driving recommendation to a driver of a train in accordance an embodiment not belonging to the present invention;
Fig. 5 depicts an illustration of an iterative method of providing a recommendation to a driver of a train in accordance with exemplary embodiments of the invention for a particular trip scenario;
Fig. 6 depicts an illustration for a repeatedly carried out method of providing a driving recommendation to a driver of a train in accordance with exemplary embodiments of the invention for the particular trip scenario of Fig. 5;
Fig. 7 depicts an illustration of different results of a method of providing a driving recommendation to a driver of a train in accordance with exemplary embodiments of the invention for another particular trip scenario, when constrained by different travel time limits;
Fig. 8 depicts an illustration of different results of a method of providing a driving recommendation to a driver of a train in accordance with exemplary embodiments of the invention for yet another particular trip scenario, when constrained by different travel time limits;
Fig. 9 depicts a flow chart diagram of a method of providing a driving recommendation to a driver of a train in accordance with exemplary embodiments of the invention; and
Fig. 10 shows a block diagram of a train driver advisory system in accordance with exemplary embodiments of the invention.

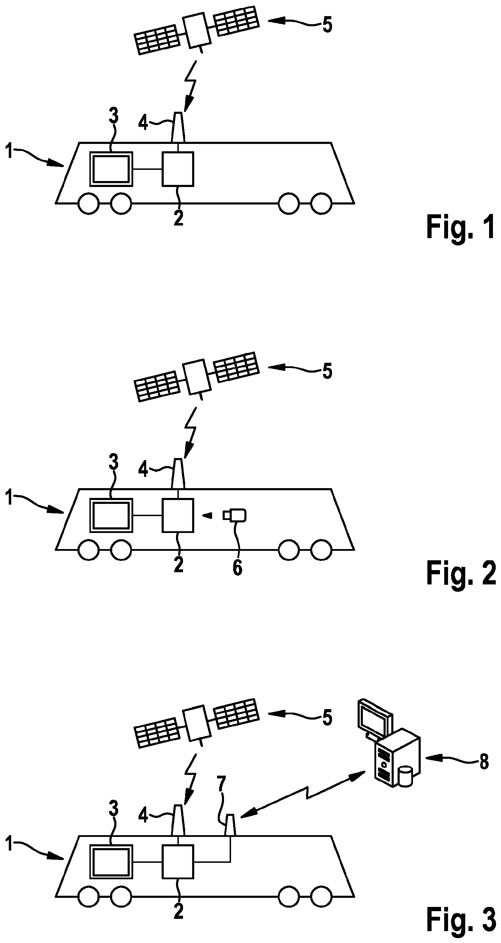

**Fig. 1** shows a schematic illustration of a train 1, equipped with a train driver advisory system 3 in accordance with exemplary embodiments of the invention. The train 1 is depicted as consisting of a locomotive, also referred to as a traction drive unit, only. However, it is understood that the train 1 may comprise further rail cars, such as passenger wagons or freight cars. The train 1 can also include multiple locomotives, with one or more or all of them being equipped with respective train driver advisory systems.

The train driver advisory system 3 has a computation module, such as a processor with associated processor memory, a memory for storing data about a trip to be undertaken by the train and data about the dynamic behavior characteristics of the train, and a display for providing a driving recommendation to a driver of the train 1.

The train 1 further comprises a train control unit 2, which is coupled to the train driver advisory system 3. The train control unit 2 is the interface for the train driver to control the train 1. In particular, the train control unit 2 is coupled to the one or more engines of the train 1 as well as to the brakes of the train for controlling the velocity of the train. In this way, the driver can control the velocity of the train 1 via the train control unit 2.

The train 1 is further equipped with a receiver 4 of a navigation satellite system 5, in particular a global navigation satellite system, such as GPS, for receiving data that allows the train control unit 2 and/or the train driver advisory system 3 to determine the momentary / actual position of the train 1.

In the exemplary embodiment of Fig. 1, various data about the train 1 as well as about a trip to be undertaken by the train 1 are present in the train control unit 2.

The train control unit 2 has high level data on the accelerating and braking characteristics of the train 1. In particular, the train control unit 2 has data on the different kinds of feasible levels of accelerating and braking and corresponding information with respect to the energy consumption and, if applicable, energy recuperation at those levels. It is also possible that the train control unit 2 has data on more basic physical properties of the train 1, such as length, number of rail cars, weight of the rail cars, power rating(s) of the engine(s), associated energy consumption, braking forces of the brakes, driving resistance, energy stored in rotating mass, etc. It is further possible that the train control unit 2 and/or the train driver advisory system 3 is capable of calculating above described high level accelerating and braking data and associated energy consumption/recuperation data from the more basic physical characteristics of the train. The described data, potentially including further pieces of data, determining the dynamic behavior of the train 1, are generally referred to as the dynamic behavior characteristics of the train.

Further, the train control unit 2 has various data on the trip to be undertaken by the train 1. In particular, the train control unit 2 may have data such as the overall distance of a trip, data on various legs of the trip, such as the distances of the individual legs between stations, the altitude profile along the trip, the velocity limits along the trip, the type and, potentially, the state of the rails, on which the train 1 drives, weather information, schedule information, etc. The schedule data may comprise data such as scheduled travel times, travel time limits for the entire trip and/or for particular legs or segments of the trip, minimum travel times, when all velocity limits are obeyed, acceptable deviations from the minimum travel times and/or scheduled travel times, etc. This data may be present in the train control unit 2 for all trips that the train may possibly be assigned to.

The train driver advisory system 3 is coupled to the train control unit 2 and can access all of the dynamic behavior characteristics of the train, the data on the trip to be undertaken by the train 1, and the schedule data. On the basis of this information, the train driver advisory system 3 determines an energy-optimized velocity profile for a given trip segment, constrained by the travel time limit for the trip segment and the velocity limits along the trip segment, as will be explained in greater detail below. Further, the train driver advisory system 3 provides a driving recommendation on the basis of the determined energy-optimized velocity profile to the driver of the train 1. The train driver may then adopt the driving recommendation and operate the train 1 accordingly via the train control unit 2.

**Fig. 2** shows a schematic illustration of another train 1, also equipped with a train driver advisory system 3 in accordance with exemplary embodiments of the invention. The train 1 has many components that are identical to the respective components of the train 1 of Fig. 1. They are not described in detail, and above description of Fig. 1 is referred to herewith. The train drive unit 2 of Fig. 2 is similar to the train drive unit 2 of Fig. 1, but has an additional data interface 6. Via the data interface 6, additional and/or updated data may be imported into the train drive unit 2. For example, after the set-up of the train 1 has been changed, such as due to a de-coupling of particular rail cars and/or an adding of more / different rail cars, new data about the physical properties of the train 1 can be imported into the train drive unit 2. Also, when the train 1 is assigned to a new route and/or when the schedule for a particular trip is changed, updated and/or new trip data and schedule data may be imported via the data interface 6. The data interface 6 may be any kind of data interface that allows for an operator to connect some form of data carrier / data storage medium to the train drive unit 2. Exemplary data carriers are USB sticks, CDs and DVDs, laptop computers, etc.

**Fig. 3** shows yet another train 1, equipped with a train driver advisory system 3 in accordance with exemplary embodiments of the invention. The train 1 of Fig. 3 is similar to the train 1 of Fig. 1 and the train 1 of Fig. 2. Many components of the train 1 of Fig. 3 are identical to the components described above. The description is not repeated, and the description of those components with respect to Fig. 1 and 2 is referred to herewith. Analogous to the train 1 of Fig. 2, the train 1 of Fig. 3 also has an additional data interface to the outside of the train 1. In the exemplary embodiment of Fig. 3, the train 1 has a wireless communication interface 7, coupled to the train control unit 2. The wireless communication interface 7 is capable of exchanging data with an external computer system 8. The external computer system 8 may be a train coordination center that coordinates the operation of various trains in a railway network. In this way, the train 1 and, thus, the train driver advisory system 3 can be provided with up-to-date information on the trip being undertaken by the train 1, such as potentially adjusted velocity limits along the trip, data on particular weather influences, data on potential obstacles, data on necessary re-routing of the train 1, etc.

In Fig. 1 to 3, the train driver advisory system 3 accesses the data on the physical behavior characteristics of the train 1, the trip data, the schedule data, and the position data via the train control unit 2. However, it is pointed out that such data may also be stored in a dedicated memory of the train driver advisory system 3 itself and that the train driver advisory system 3 may be directly coupled to one or all of the receiver 4 of the global navigation satellite system 5, the data interface 6, and the wireless communication interface 7.

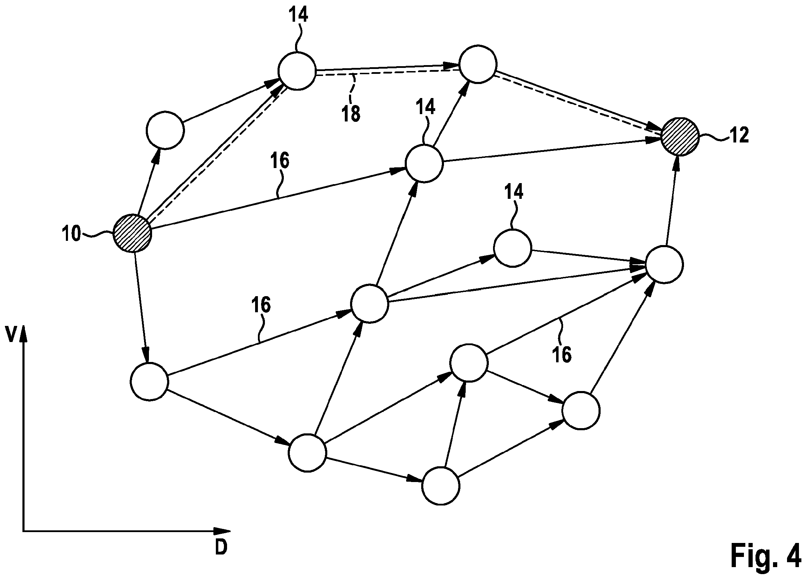

**Fig. 4** depicts an illustration of a method of providing a driving recommendation to a driver of a train that may be used by each of the train driver advisory systems 3, depicted in Fig. 1 to 3 and described above. In particular, Fig. 4 depicts various details of a graph based optimization algorithm, which may be used in the method of providing the driving recommendation. In the exemplary embodiment of Fig. 4, the graph based optimization algorithm is carried out in the framework of a coordinate system having the travel distance assigned to the x-axis and having the train velocity assigned to the y-axis. In other words, the coordinate system for the graph based optimization algorithm allows for a specification of the train velocity, depending on the position of the train. The graph based optimization algorithm is carried out for determining an energy-optimized path within said coordinate system, which energy-optimized path then forms the basis for an energy-optimized velocity profile, which in turn is used as the basis for providing a driving recommendation to the driver of the train. This will be explained in detail below.

For carrying out the graph based optimization algorithm, an initial state 10 of the train and a goal state 12 of the train are defined. The initial state 10 of the train is defined by the actual position of the train, also referred to as the momentary position of the train, and the actual velocity of the train, also referred to as the momentary velocity of the train. Being defined by the actual position and the actual velocity of the train, the initial state 10 can be represented as a point in the distance / velocity coordinate system of Fig. 4. The goal state 12 of the train is defined by a goal position of the train and a goal velocity of the train. The goal position of the train is defined by the actual position of the train, incremented by the distance of the trip segment for which the graph based optimization algorithm is to be carried out. The goal velocity of the train may be defined in a fairly arbitrary manner. For example, the goal velocity of the train may be defined as a preset percentage of the velocity limit applicable at the goal position. In another example, the goal velocity may be defined as a function of a distance between the goal position and the next stop / station along the trip of the train, with the goal velocity being the lower, the closer the goal position is to the next stop / station. Being defined by the goal position and the goal velocity, the goal state 12 may also be represented by a point in the distance / velocity coordinate system of Fig. 4. The entirety of all positions between the actual position of the train and the goal position of the train is referred to as the trip segment for which the energy-optimized velocity profile is determined via the graph based optimization algorithm.

With the initial state 10 and the goal state 12 being defined, a plurality of intermediate states 14 are defined in the distance / velocity coordinate system. Each of the plurality of intermediate states 14 is defined by a position value and a velocity value. For each of the intermediate states 14, the position value is between the actual position of the train and the goal position of the train. Further, for each of the intermediate states 14, the velocity value is below the velocity limit at the respectively applicable position. In the illustrative depiction of Fig. 4, there are depicted twelve intermediate states 14, illustrated as circles, with three of those circles being provided with reference numeral 14 for illustrative purposes. Each of the intermediate states 14 represents a potential state of the train on its way from the actual position to the goal position.

In the exemplary embodiment of Fig. 4, the plurality of intermediate states form an irregular grid of intermediate states (irregular grids however not belonging to the present invention). In other words, the intermediate states 14 are not spaced and distributed regularly over the distance / velocity coordinate system of Fig. 4. It is pointed out that the graph based optimization algorithm leads to the determination of an energy-optimized path among the defined intermediate states, irrespective whether the grid of intermediate states is a regular grid or an irregular grid, such as a grid of arbitrarily arranged intermediate states.

Besides the plurality of intermediate states 14, a plurality of grid edges 16 are defined. Each of the grid edges 16 connects two states of the set of states, comprising the initial state 10, the goal state 12, and the intermediate states 14. The grid edges 16 are directional grid edges, having a positive component in the distance-direction and a positive, negative or zero component in the velocity-direction. In this way, the grid edges 16 represent changes of the state of the train that take place during the driving along the trip segment from the actual position to the goal position. The grid edges 16 having a positive distance component means that the train keeps moving forward and does not undertake any backwards movement. In general, each of the depicted states could be connected to all states towards its right in the drawing plane of Fig. 4. However, only a subset of those potential grid edges are shown. In particular, 24 grid edges are shown in the exemplary embodiment of Fig. 4, with three of these edges being provided with reference numeral 16 for illustrative purposes. The definition of the grid edges 16 may be carried out in accordance with one or more criteria. For example, it is possible that each state may be connected to a predefined number of its closest states towards the right. In addition / alternatively, it is possible that each state may be connected to all states towards the right that are less than a predetermined distance removed. It is also possible that the grid edges are defined on the basis of the dynamic behavior characteristics of the train, such as taking into account maximum accelerating and braking values of the train in question. It is apparent to the skilled person that the grid edges may be defined in accordance with various criteria or that all potential grid edges may be defined as well.

With the plurality of grid edges 16 being defined, an energy-consumption value and a required travel time value of the train are determined for each one of the grid edges 16. In other words, it is determined for each of the grid edges 16 how much energy the train consumes and how much travel time the train needs to reach from the starting state to the target state of the respective grid edge 16. In particular, it is determined for each grid edge how much energy must be consumed or how much energy can be recuperated, if applicable, for the train to move in position from the starting state position to the target state position of the respective grid edge, while carrying out the acceleration / deceleration indicated by the velocity change between the starting state and the target state of the respective grid edge. Further in particular, the required travel time for this change of state is determined. In this way, each of the grid edges 16 is associated with two values, namely an energy consumption value, which may be negative in case of energy recuperation, and a required travel time value. It is also possible that the energy consumption / recuperation scale may be offset, such that both energy consumption values and energy recuperation values are positive, which simplifies the implementation of the graph based optimization algorithm. The method determines the energy consumption value and the required travel time value, taking into account the dynamic behavior characteristics of the train, e.g. on the basis of the factors impacting the accelerating / deceleration characteristics and power consumption characteristics described above.

On the basis of this data, the summed energy consumption and the summed required travel time is determined for all possible paths from the initial state 10 to the goal state 12 via the grid of intermediate states 14 and the plurality of grid edges 16. In other words, for each of all possible paths from the initial state 10 to the goal state 12, a sum value of the energy consumption values of the respective grid edges 16 and a sum value of the required travel time values of the respective grid edges 16 is determined. As a result, for each of the potential paths from the initial state 10 to the goal state 12, an overall energy consumption value and an overall travel time value are determined. The energy-optimized path is then determined as that path whose summed required travel time is below the travel time limit for the trip segment and whose summed energy-consumption is minimal among those paths whose summed required travel time is below the travel time limit.

In the exemplary embodiment of Fig. 4, the determined energy-optimized path is indicated as the dashed line 18. This energy-optimized path 18 from the initial state 10 to the goal state 12 is the path trough the grid of intermediate states 14 that has the lowest summed energy consumption, while the summed required travel time is below the travel time limit, as set for the execution of the method with respect to the exemplary embodiment of Fig. 4. The energy-optimized path 18 extends from the initial state 10 through two intermediate states 14, having a higher velocity value than the initial state 10 to the goal state 12, which also has a lower velocity value than the two intermediate states 14 of the energy-optimized path 18.

The energy-optimized path 18 represents an energy-optimized velocity profile of the train for the given trip segment from the initial state of the train to the goal state of the train. On the basis of this energy-optimized velocity profile, driving recommendations are provided to the driver of the train. In particular, an accelerating recommendation may be provided to a driver of the train, when the train is between the position of the initial state 10 and the position of the first of the two intermediate states 14 along the energy-optimized path 18. Then, a speed maintaining recommendation may be given to the driver of the train between the two intermediate states of the energy-optimized path 18. Further, a coasting recommendation may be provided to the driver of the train between the second of the intermediate states of the energy-optimized path 18 and the goal state 12, resulting in a steady deceleration of the train, such that the train has the velocity value, indicated by the goal state 12, at the location of the goal state 12.

While the energy-optimized path 18 may be readily used for the determination of the energy-optimized velocity profile and the provision of the driving recommendation to the driver of the train, it is also possible that the energy-optimized path 18 may be refined by one or more additional iterations of the determination of an energy-optimized path with a higher resolution of the grid of intermediate states 14.

Further, while above-described comparison of the summed energy consumption values and the summed required travel time values of all potential paths trough the grid of intermediate states 14 leads to a reliable determination of the energy-optimized path 18, it is also possible to employ other graph based optimization algorithms that do not require the comparison of all potential paths. For example, it is possible to employ the CD* algorithm, also referred to as Constraint D* algorithm, or the AD* algorithm, also referred to as Anytime Dynamic A* algorithm, for determining the energy-optimized path. These algorithms also reliably find the energy-optimized path from the initial state 10 to the goal state 12, while being quicker in execution and thus providing for a quicker provision of the driving recommendation to the driver of the train, thus again leading to a more energy-efficient operation of the train. As indicated above, the details of the CD* and AD* algorithms are incorporated herein by reference.

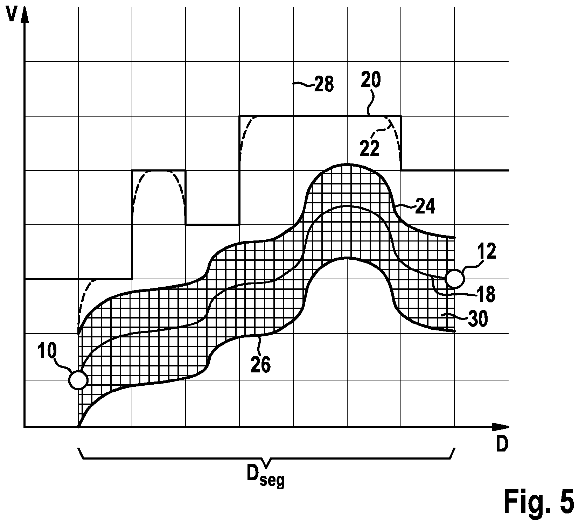

**Fig. 5** depicts an illustration of an iterative method of providing a recommendation to a driver of a train in accordance with exemplary embodiments of the invention. In particular, Fig. 5 illustrates an iteratively derived energy-optimized velocity profile for a trip segment from an initial state 10 to a goal state 12, wherein the iteratively derived energy-optimized velocity profile may be used as a basis for the driving recommendation to the driver of the train.

Analogous to Fig. 4, Fig. 5 depicts a distance / velocity coordinate system, with the initial state 10 of the train and the goal state 12 of the train being respective points in the distance / velocity coordinate system. The energy-optimized velocity profile is determined for the trip segment from the initial state 10 of the train to the goal state 12 of the train, the trip segment having a distance D_{seg}. In the coordinate system of Fig. 5, the velocity limits 20 along the trip segment are depicted as a function of the location along the trip segment. In addition, a minimum time curve 22 is depicted, which represents the time-optimized velocity profile of the train, irrespective of energy consumption. This minimum time curve 22 is only constrained by the velocity limits 20 and the technical accelerating and braking capability limits of the train. Despite not being shown in the exemplary embodiment of Fig. 5, it is possible that minimum velocity values are provided, such that the energy-optimized path is determined in the corridor between the velocity limits and the minimum velocity values.

Fig. 5 depicts the energy-optimized path 18 between a second and a third iteration of the graph based optimization algorithm. During the first iteration, the energy-optimized path was determined among the intermediate states regularly arranged among the grid points of a low resolution grid 28. In a second iteration, the resolution of the grid of intermediate states was increased and the grid of intermediate states was limited to a neighborhood of the energy-optimized path of the first iteration. The result of this second iteration is shown in Fig. 5 as the energy-optimized path 18. For the third iteration, a neighborhood around the energy-optimized path 18 is defined by borders 24 and 26, and an even higher resolution grid of intermediate states 30 is defined around the energy-optimized path 18 between the borders 24 and 26. It is now the next step to determine the energy-optimized path from the initial state 10 to the goal state 12 within the higher resolution grid of intermediate states 30 between the borders 24 and 26. This will lead to a refined energy-optimized path (not shown), which may then form the basis for the energy-optimized velocity profile of the train.

It is pointed out that an arbitrary number of iterations may be performed, with the energy-optimized path approaching the overall optimal solution with every iteration. However, the number of iterations may also be limited in order to find a beneficial trade-off between optimality and computational speed. The energy-optimized path, as determined in the last iteration, may be used for determining the energy-optimized velocity profile, e.g. by defining the energy-optimized velocity profile to correspond to the energy-optimized path as both are in the distance / velocity space, and for providing the driving recommendations to the driver of the train.

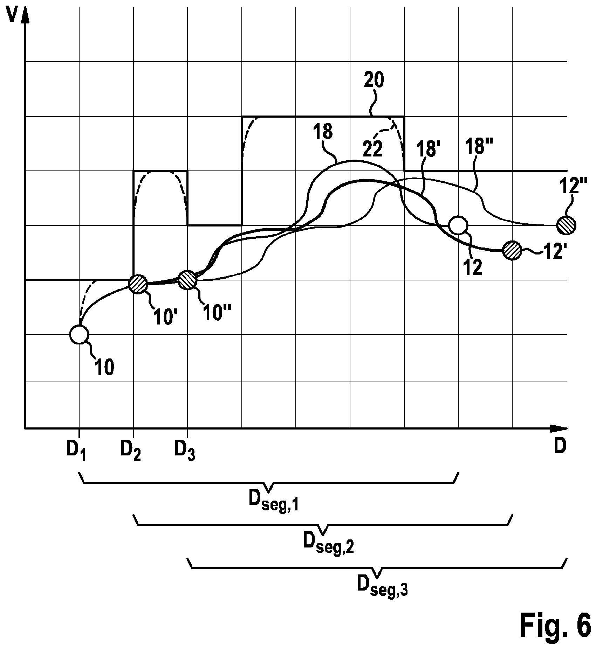

**Fig. 6** depicts an illustration of a repeatedly carried out method of providing a driving recommendation to a driver of a train in accordance with exemplary embodiments of the invention. The trip at issue in Fig. 6 is the same as the trip at issue in Fig. 5, with the velocity limits 20 and the minimum time curve 22 being the same between Fig. 5 and Fig. 6. Fig. 6 illustrates how the driving recommendation to the driver of the train may change over time when the method of providing the driving recommendation is carried out at different points of time during the operation of the train, i.e. at different momentary locations of the train. Further, Fig. 6 illustrates the particular case of repeated executions of the method of providing the driving recommendation for a sliding window scenario, i.e. for carrying out the method of providing the driving recommendation for different trip segments, each of which having the same distance.

When the train is at position D1, the method of providing the driving recommendation to the driver of the train is carried out on the basis of a first trip segment reaching from the initial state 10 to the goal state 12 and having a distance D_{seg,1}. For the first trip segment, the method determines a first energy-optimized velocity profile 18. On the basis of this energy-optimized velocity profile 18, the driver of the train is provided with a recommendation of accelerating at the position D1. Between the position D1 and a position D2, the driver is provided with driving recommendations in accordance with the energy-optimized velocity profile 18. At position D2, the method is carried out again, with the method being carried out for a second trip segment from the initial state 10' to the goal state 12', having distance D_{seg,2}. At this point, the method determines a second energy-optimized velocity profile 18'. It can be seen that this re-calculated energy-optimized velocity profile 18' is similar to the initially calculated energy-optimized velocity profile 18, in particular in a part of the trip segment close to the location D2. However, the initial energy-optimized velocity profile 18 and the re-calculated energy-optimized velocity profile 18' substantially deviate towards a later part of the trip segment. At location D2, the driver of the train is provided with the recommendation of substantially maintaining the speed of the train. At location D3, the method is again carried out, with the initial state 10" and the goal state 12" defining a third trip segment, having distance D_{seg,3}, for the optimization to be carried out. This further re-calculation leads to the determination of the re-calculated energy-optimized velocity profile 18". On the basis of this re-calculated energy-optimized profile 18", the driver of the train is provided with the recommendation of substantially maintaining the speed of the train at location D3. It is apparent from Fig. 6 that this recommendation substantially deviates from the recommendations that would have been based on the other energy-optimized velocity profiles 18 and 18'.

The method of providing the driving recommendation may be repeated at regular intervals along the trip, such as illustrated by the three executions described above. It is also possible that the method is repeated in regular time intervals or that the method is repeated upon according commands by the driver of the train or by an external control center.

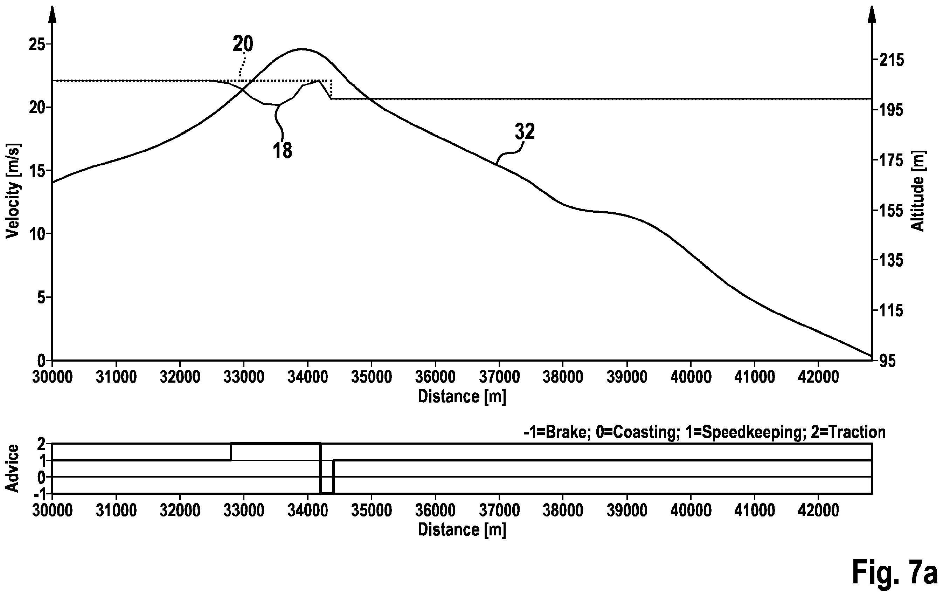

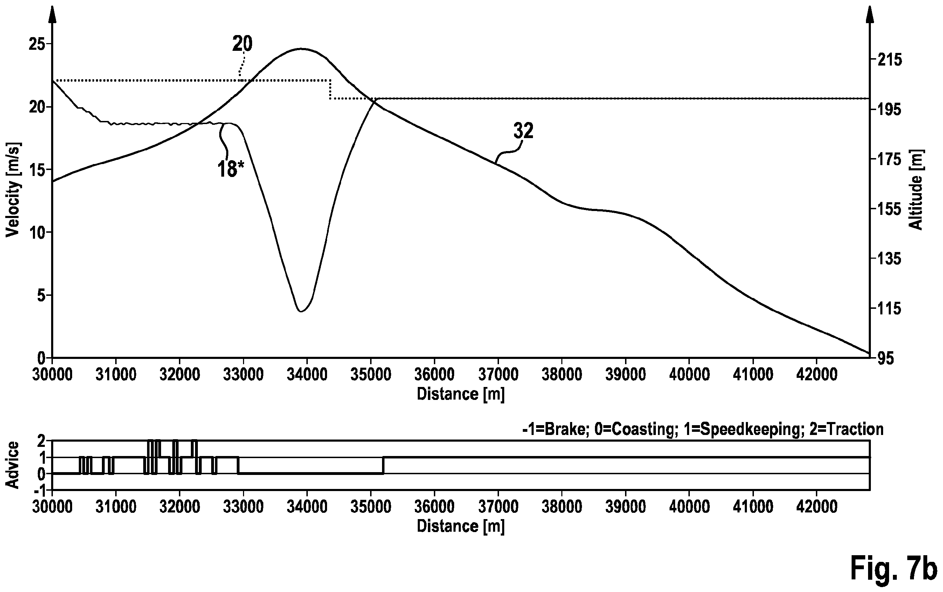

**Fig. 7** depicts an illustration of different results of a method of providing a driving recommendation to a driver of a train in accordance with exemplary embodiments of the invention. The different results are shown for a particular trip, when constrained by different travel time limits. In Fig. 7, a trip segment from km 30 to km 43 of a larger trip is depicted, with the method of providing the driving recommendation being carried out for that trip segment. For the trip segment, the velocity limits are depicted as a dotted line 20. Further, an altitude profile 32 is depicted for the trip segment, with the altitude profile 32 comprising a mountain to be crossed, having its peak around km 34.

In Fig. 7a, an energy-optimized velocity profile 18 is depicted that is the result of the method of providing the driving recommendation to the driver of the train, as discussed hereinabove, with the travel time limit for the trip segment being only slightly above the minimum time possible. The method determines the energy-optimized velocity profile to use the small amount of time slack with respect to the minimum time possible for driving the train below the maximum speed in the uphill section of the altitude profile 32, in particular in the steepest portion of this uphill section close to the peak of the mountain.

In the lower part of 7a, an accelerating recommendation is depicted that is provided to the driver of the train in accordance with the energy-optimized velocity profile 18, depicted in the upper part of Fig. 7a. In the exemplary embodiment of Fig. 7, the acceleration recommendation assumes one of four states at each point in time during the trip of the train. In particular, the acceleration recommendation, also referred to as "advice" in Fig. 7, may assume one of the four states "Brake", "Coasting", "Speedkeeping", and "Traction". While only those four states are shown, it is understood that the states "Brake" and "Traction" may also contain various sub-states for different levels of braking and accelerating. The recommendation "Coasting" refers to a state of not actively accelerating or braking the train and letting the train move on in accordance with its kinetic and potential energy. The recommendation "Speedkeeping" refers to maintaining the speed of the train, including some accelerating and braking in order to make up for changes in altitude and/or energy losses due to friction and/or aerodynamic drag.

During the last part of the uphill portion of the trip segment, the driving recommendation is an accelerating recommendation. However, in order to comply with the energy-optimized velocity profile 18, which indicates a dip in velocity, a moderate accelerating is in order. This may be indicated to the driver of the train either by indicating an associated level of accelerating and/or by providing a velocity recommendation in accordance with the energy-optimized velocity profile, such that the train driver can select the appropriate level of accelerating. Further, braking is applied to the train at the beginning of the downhill part of the trip segment, with the braking having the purpose of the train meeting the reduction in the velocity limit and counter-balancing the accelerating action of the downhill section.

Fig. 7b shows another energy-optimized velocity profile 18* for the same trip segment, as shown in Fig. 7a. The energy-optimized velocity profile 18* is determined with the same graph based optimization algorithm as the energy-optimized velocity profile 18 of Fig. 7a, only with the travel time limit having a different value. In particular, the energy-optimized velocity profile 18* is determined with the travel time limit being at 25% over the minimum time possible, when obeying all velocity limits 20. As is apparent from Fig. 7b, the energy-optimized velocity profile 18* has a lower velocity in the uphill part of the trip segment and a stronger dip in the velocity around the peak of the mountain of the trip segment, when compared to the energy-optimized velocity profile 18 of Fig. 7a. In other words, the method determines that the allowed time slack contributes most to the energy efficiency, when reducing the velocity in the uphill portion and around the peak.

In the lower part of Fig. 7b, the associated accelerating recommendations to the driver of the train are depicted. It can be seen that a mix of coasting, speed keeping and accelerating recommendations are provided in the uphill part of the trip segment, while mostly speed keeping is recommended in Fig. 7a.

In general, the driver may be provided with the energy-optimized velocity profile or with momentary velocity recommendations or with momentary accelerating recommendations or with any combination of those data for conveying a suitable driving recommendation to the driver.

As can be seen in the upper part of Fig. 7b, the energy-optimized velocity profile 18* has some jitter in the uphill part of the trip segment. It is possible to low pass filter the energy-optimized velocity profile 18* and to, thus, reach a smoothened energy-optimized velocity profile. Such a smoothened energy-optimized velocity profile may lead to less frequent changes in the driving recommendation to the driver, as shown in the lower part of Fig. 7b, thus increasing passenger comfort. The energy-optimized velocity profile may also be filtered for other reasons.

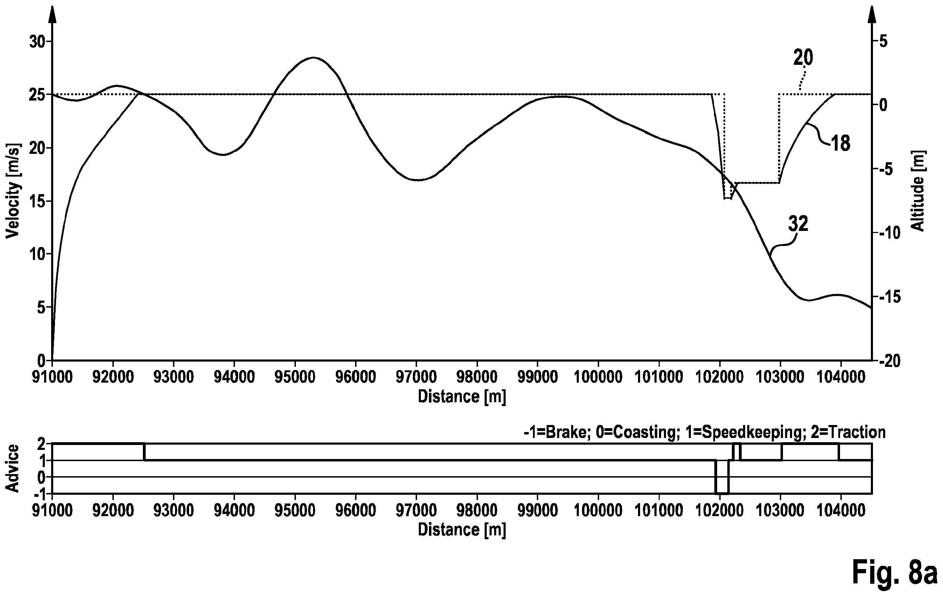

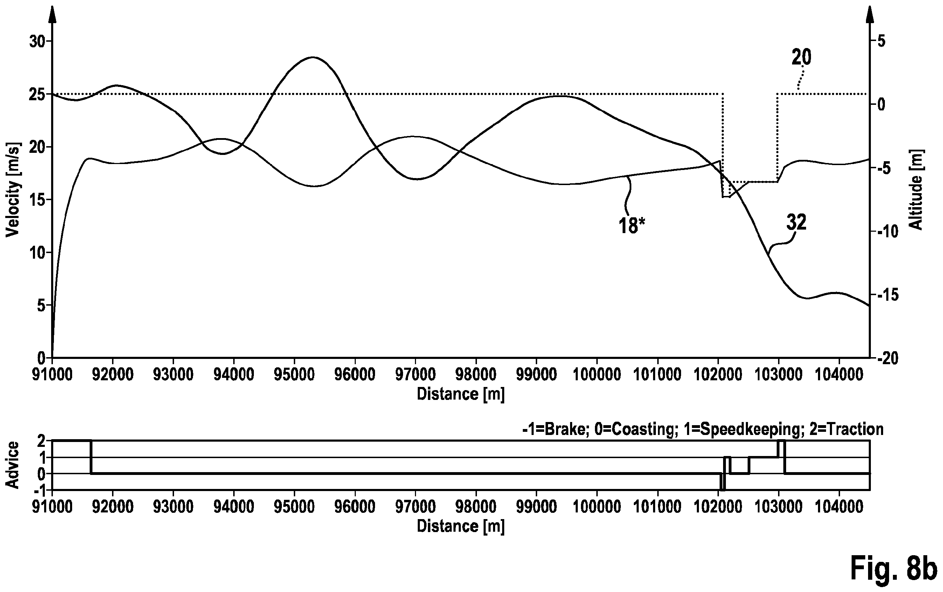

**Fig. 8** depicts, similar to Fig. 7, two different results of a method of providing a driving recommendation to a driver of a train in accordance with exemplary embodiments of the invention. The different results are depicted for the same particular trip segment, when constrained by different travel time limits. In particular, Fig. 8a and Fig. 8b show two different results for a trip segment from km 91 to km 104 of a larger trip. Again, the velocity limits 20 and the altitude profile 32 are depicted in Fig. 8. Further, in both of Fig. 8a and Fig. 8b, an energy-optimized velocity profile 18, 18* and associated accelerating recommendations are depicted.

In Fig. 8a, the depicted energy-optimized velocity profile 18 is the result of a graph based optimization algorithm, with the travel time limit being close to the minimum time limit, when obeying all velocity limits 20. As can be seen in the lower part of Fig. 8a, this leads to extended sections of speed keeping and accelerating. In contrast thereto, Fig. 8b depicts the energy-optimized velocity profile 18* for a travel time limit that is 25% above the minimum travel time. The slack in travel time allows for extended periods of coasting of the train, thus leading to an overall very energy-efficient operation along the trip segment.

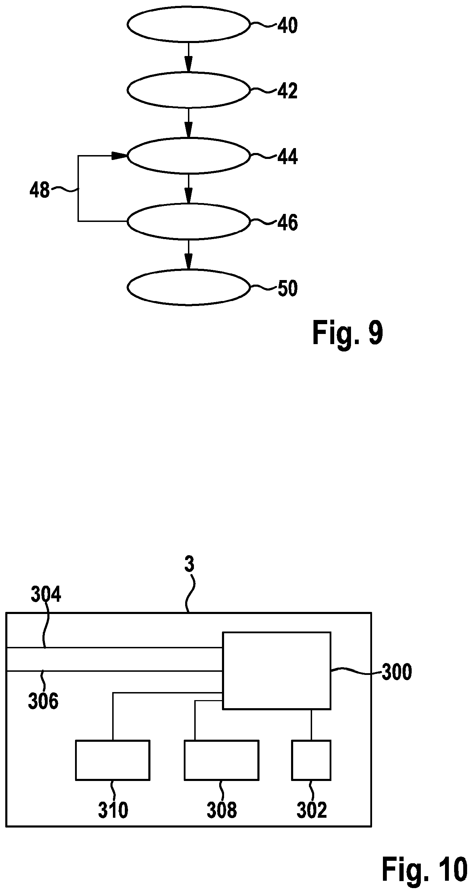

**Fig. 9** depicts a flow chart of a method of providing a driving recommendation to a driver of a train in accordance with exemplary embodiments of the invention. In step 40, the optimization horizon is set. In particular, it may be set if the optimization is carried out in a time / velocity space or in a distance / velocity space. It is also possible that one of the horizons is preset and that step 40 is dispensed with. In step 42, the initial state, the goal state, the plurality of intermediate states, in particular in the form of a grid of intermediate states, and the plurality of grid edges are defined. Further, the energy consumption and the required travel time are determined for each of the grid edges in step 42. In step 44, the energy-optimized path through the grid of intermediate states is determined. In particular, the energy-optimized path may be determined via one of or a combination of the CD* and AD* algorithms. In step 46, it is determined if the energy-optimized path is considered final. If not, an updated grid of intermediate states and an updated set of grid edges is defined around the energy-optimized path, with the energy consumption and the required travel time being determined for each of the updated set of grid edges. The updated grid of intermediate states is around the energy-optimized path, determined thus far, and has a higher resolution than the previously employed grid of intermediate states. The method then returns to step 44 for an additional iteration of determining the energy-optimized path, cf. arrow 48 indicating the iteration transition. When the energy-optimized path is determined to be final, the method moves on to step 50. At step 50, an energy-optimized velocity profile is determined from the energy-optimized path, and a driving recommendation is provided on the basis of the energy-optimized velocity profile. It is also possible that the energy-optimized velocity profile is filtered for specific purposes in step 50, such as a low-pass filtering for passenger comfort.

**Fig. 10** shows a block diagram of a train driver advisory system 3 in accordance with exemplary embodiments of the invention. The train driver advisory system 3 has a processor 300 and a memory 302, coupled to the processor 300. Further, the train driver advisory system 3 has a position signal input 304, coupled to the processor 300, for receiving position data, indicative of the momentary position of the train. Yet further, the train driver advisory system has a trip, train and schedule data input 306, also coupled to the processor 300, for receiving data about the trip to be undertaken, such as distance and altitude data, for receiving data about the train, such as dynamic behavior characteristics of the train, and for receiving schedule data. It is also possible that the train driver advisory system 3 has a smaller or larger number of inputs for receiving the position data, trip data, train data, and schedule data. The train driver advisory system 3 further has a display 308 and a loudspeaker 310, both coupled to the processor 300, for providing driving recommendations to the driver. The processor is configured to carry out the method of providing a driving recommendation to the driver of the train, as de-scribed in any of the embodiments above.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teaching of the invention without departing from the essential scope thereof. Therefore, it is intended that the invention not be limited to the particular embodiments disclosed, but that the invention will include all embodiments falling within the scope of the appended claims.

### LIST OF REFERENCE NUMERALS

- 1: train
- 2: train control unit
- 3: train driver advisory system
- 4: receiver
- 5: navigation satellite system
- 6: data interface
- 7: wireless communication interface
- 10: initial state
- 12: goal state
- 14: intermediate states
- 16: grid edges
- 18: energy-optimized path
- 20: velocity limits
- 22: minimum time curve
- 24,26: borders
- 28: low resolution grid
- 30: higher resolution grid
- 32: altitude profile
- 40, 42, 44, 46, 50: method steps
- 48: iteration transition
- 300: processor
- 302: memory
- 304: position signal input
- 306: trip, train and schedule data input
- 308: display
- 310: loudspeaker

## Claims

1. Method of providing a driving recommendation to a driver of a train (1) during operation of the train, the driving recommendation being based on a distance (Dseg ) and an altitude profile (32) of a trip segment to be covered by the train, a travel time limit for the trip segment, and velocity limits (20) along the trip segment, wherein the method comprises the steps of:
defining an initial state (10) of the train on the basis of an actual position of the train and an actual velocity of the train,
defining a goal state (12) of the train on the basis of a goal position and a goal velocity at the end of the trip segment to be covered by the train,
determining an energy-optimized velocity profile (18) between the initial state of the train and the goal state of the train, with the energy-optimized velocity profile being determined by a graph based optimization algorithm, constrained by the travel time limit for the trip segment and the velocity limits along the trip segment, and
providing the driving recommendation to the driver on the basis of the energy-optimized velocity profile, wherein the step of determining the energy-optimized velocity profile (18) between the initial state (10) of the train and the goal state (12) of the train by the graph based optimization algorithm comprises:
defining a grid of intermediate states (14) between the initial state and the goal state,
defining a plurality of grid edges (16) between the initial state, the grid of intermediate states and the goal state, the plurality of grid edges forming a plurality of paths from the initial state to the goal state via the grid of intermediate states,
for each of the plurality of grid edges, determining an energy consumption of the train and determining a required travel time of the train along the respective grid edge, and
determining an energy-optimized path from the initial state to the goal state on the basis of the energy consumption of the train along the plurality of grid edges, with the required travel time along the grid edges of the energy-optimized path being within the travel time limit, wherein the grid of intermediate states (14) is a regular grid of intermediate states.

2. Method according to claim 1, wherein the driving recommendation comprises at least one of:
a train velocity recommendation, derived from the energy-optimized velocity profile (18) and the actual position of the train, and
an acceleration recommendation, derived from the energy-optimized velocity profile (18), the actual velocity of the train and the actual position of the train, with the acceleration recommendation recommending one of an accelerating, a braking, and a maintaining of the velocity of the train.

3. Method according to claim 1, wherein each of the intermediate states (14) is defined by a respective distance value and a respective train velocity value or wherein each of the intermediate states is defined by a respective travel time value and a respective train velocity value.

4. Method according to any of claims 1 to 3, wherein the energy consumption of the train (1) and the required travel time of the train along the plurality of grid edges (16) are determined according to dynamic behavior characteristics of the train, in particular taking into account accelerating and braking capabilities of the train.

5. Method according to any of claims 1 to 4, wherein the grid of intermediate states (14) is defined according to dynamic behavior characteristics of the train and/or wherein the plurality of grid edges (16) are defined according to dynamic behavior characteristics of the train.

6. Method according to any of claims 1 to 5, wherein the step of determining an energy-optimized velocity profile (18) between the initial state (10) of the train and the goal state (12) of the train is carried out in an iterative manner, with the grid of intermediate states of a particular iteration having a higher resolution than the grid of intermediate states of a previous iteration and with the grid of intermediate states of the particular iteration being defined around the energy-optimized path of the previous iteration.

7. Method according to any of the preceding claims, further comprising the step of: low pass filtering the energy-optimized velocity profile (18), determined by the graph based optimization algorithm.

8. Method according to any of the preceding claims, wherein the graph based optimization algorithm is one of a CD* algorithm, an AD* algorithm, and a succession of a CD* algorithm and an AD* algorithm.

9. Method according to any of the preceding claims, repeatedly carried out in regular intervals and/or in response to respective start commands for providing updated driving recommendations to the driver of the train over time.

10. Method of setting a train velocity during operation, comprising:
providing a driving recommendation to a driver of a train (1) according to the method of any of the preceding claims, and
allowing the driver of the train to control the train velocity on the basis of the driving recommendation.

11. Train driver advisory system (3) for providing driving recommendations to a driver of a train (1), the train driver advisory system comprising:
a memory for storing a distance and an altitude profile of at least one trip segment, at least one travel time limit for the at least one trip segment and velocity limits along the at least one trip segment,
a position signal input for receiving position data, indicative of the position of the train, from a navigation satellite system (5), and
a computation module, coupled to the memory and the position signal input and configured to carry out the method of providing a driving recommendation in accordance with any of claims 1 to 9.

12. Train driver advisory system (3) according to claim 11, further comprising at least one of:
a display for visually providing the driving recommendations to the driver of the train (1), and
a speaker for audibly providing the driving recommendations to the driver of the train.

13. Train (1), comprising a train driver advisory system (3) in accordance with claims 11 or 12.

## Patentansprüche

1. Verfahren zur Bereitstellung einer Fahrempfehlung für einen Führer eines Zuges (1) während des Betriebs des Zuges, wobei die Fahrempfehlung auf einer Entfernung (Dseg) und einem Höhenprofil (32) eines vom Zug zu befahrenden Fahrtsegments, einer Fahrtzeitgrenze für das Fahrtsegment und einer Geschwindigkeitsgrenze (20) entlang dem Fahrtsegment basiert, wobei das Verfahren die folgenden Schritte umfasst:
die Definition eines Anfangszustandes (10) des Zuges auf der Basis einer Istposition des Zuges und einer Istgeschwindigkeit des Zuges,
die Definition eines Zielzustandes (12) des Zuges auf der Basis einer Zielposition und einer Zielgeschwindigkeit am Ende des vom Zug zu befahrenden Fahrtsegments,
die Bestimmung eins energieoptimierten Geschwindigkeitsprofils (18) zwischen dem Anfangszustand des Zuges und dem Zielzustand des Zuges, wobei das energieoptimierte Geschwindigkeitsprofil von einem auf einem Kurvenbild basierenden Optimierungsalgorithmus bestimmt wird, der von der Fahrtzeitgrenze für das Fahrtsegment und den Geschwindigkeitsgrenzen entlang dem Fahrtsegment eingeschränkt wird, und die Bereitstellung der Fahrempfehlung für den Führer auf der Basis des energieoptimierten Geschwindigkeitsprofils, wobei der Schritt der Bestimmung des energieoptimierten Geschwindigkeitsprofils (18) zwischen dem Anfangszustand (10) des Zuges und dem Zielzustand (12) des Zuges durch den auf einem Kurvenbild basierenden Optimierungsalgorithmus folgendes umfasst:
die Definition eines Netzes von Zwischenzuständen (14) zwischen dem Anfangszustand und dem Zielzustand,
die Definition einer Vielzahl von Netzrändern (16) zwischen dem Anfangszustand, dem Netz von Zwischenzuständen und dem Zielzustand, wobei die Vielzahl von Netzrändern eine Vielzahl von Pfaden vom Anfangszustand zum Zielzustand über das Netz von Zwischenzuständen bildet,
die Bestimmung eines Energieverbrauchs des Zuges und die Bestimmung einer erforderlichen Fahrtzeit des Zuges entlang dem betreffenden Netzrand für eine jede der Vielzahl von Netzrändern, und
die Bestimmung eines energieoptimierten Pfades vom Anfangszustand zum Zielzustand auf der Basis des Energieverbrauchs des Zuges entlang der Vielzahl von Netzrändern, wobei die erforderliche Fahrtzeit entlang den Netzrändern des energieoptimierten Pfades innerhalb der Fahrtzeitgrenze liegt, wobei das Netz der Zwischenzustände (14) ein regelmäßiges Netz von Zwischenzuständen ist.

2. Verfahren nach Anspruch 1, wobei die Fahrempfehlung mindestens einen der folgenden Punkte umfasst:
eine Zuggeschwindigkeitsempfehlung, die von dem energieoptimierten Geschwindigkeitsprofil (18) und der Istposition des Zuges abgeleitet ist, und
eine vom energieoptimierten Geschwindigkeitsprofil (18), von der Istgeschwindigkeit des Zuges und der Istposition des Zuges abgeleitet Beschleunigungsempfehlung, wobei die Beschleunigungsempfehlung entweder eine Beschleunigung oder eine Bremsung oder eine Aufrechterhaltung der Geschwindigkeit des Zuges empfiehlt.

3. Verfahren nach Anspruch 1, wobei jeder der Zwischenzustände (14) von einem jeweiligen Entfernungswert und einem jeweiligen Zuggeschwindigkeitswert definiert wird oder wobei jeder der Zwischenzustände von einem jeweiligen Fahrtzeitwert und einem jeweiligen Zuggeschwindigkeitswert definiert wird.

4. Verfahren nach einem der Ansprüche 1 bis 3, wobei der Energieverbrauch des Zuges (1) und die erforderliche Fahrtzeit des Zuges entlang der Vielzahl von Netzrändern (16) gemäß den dynamischen Verhaltungskennlinien des Zuges bestimmt werden, wobei insbesondere das Beschleunigungs- und das Bremsvermögen des Zuges berücksichtigt werden.

5. Verfahren nach einem der Ansprüche 1 bis 4, wobei das Netz von Zwischenzuständen (14) gemäß den dynamischen Verhaltungskennlinien des Zuges definiert wird, und/oder wobei die Vielzahl von Netzrändern (16) gemäß den dynamischen Verhaltungskennlinien des Zuges definiert wird.

6. Verfahren nach einem der Ansprüche 1 bis 5, wobei der Schritt der Bestimmung eines energieoptimierten Geschwindigkeitsprofils (18) zwischen dem Anfangszustand (10) des Zuges und dem Zielzustand (12) des Zuges iterativ durchgeführt wird, wobei das Netz von Zwischenzuständen einer spezifischen Iteration eine höhere Auflösung hat als das Netz von Zwischenzuständen einer vorhergehenden Iteration, und wobei das Netz von Zwischenzuständen der spezifischen Iteration rund um den energieoptimierten Pfad der vorhergehenden Iteration definiert wird.

7. Verfahren nach einem der vorhergehenden Ansprüche, weiter umfassend den Schritt des: Tiefpassfilterns des vom auf einem Kurvenbild basierenden Optimierungsalgorithmus bestimmten energieoptimierten Geschwindigkeitsprofils (18).

8. Verfahren nach einem der vorhergehenden Ansprüche, wobei der auf einem Kurvenbild basierende Optimierungsalgorithmus ein CD* Algorithmus oder ein AD* Algorithmus oder eine Folge von einem CD* Algorithmus und einem AD* Algorithmus ist.

9. Verfahren nach einem der vorhergehenden Ansprüche, das in regelmäßigen Zeitabständen wiederholt und/oder als Reaktion auf jeweilige Startbefehle zur Bereitstellung von aktualisierten Fahrempfehlungen für den Führer des Zuges im Lauf der Zeit ausgeführt wird.

10. Verfahren zur Einstellung einer Zuggeschwindigkeit während des Betriebs, umfassend:
die Bereitstellung einer Fahrempfehlung für einen Führer eines Zuges (1) gemäß dem Verfahren nach einem der vorhergehenden Ansprüche, und
die Genehmigung für den Führer eines Zuges zum Regeln der Zuggeschwindigkeit auf der Basis der Fahrempfehlung.

11. Zugführerberatungssystem (3) zur Bereitstellung von Fahrempfehlungen für einen Führer eines Zuges (1), umfassend:
einen Speicher zum Speichern einer Entfernung und eines Höhenprofils von mindestens einem Fahrtsegment, mindestens einer Fahrtzeitgrenze für das mindestens eine Fahrtsegment und Geschwindigkeitsgrenzen entlang dem mindestens einem Fahrtsegment,
einen Positionssignaleingang zum Empfang von die Position des Zuges anzeigenden Positionsdaten von einem Navigationssatellitensystem (5), und
ein an den Speicher und den Positionssignaleingang gekoppeltes Rechenmodul, das zur Ausführung des Verfahrens zur Bereitstellung einer Fahrempfehlung nach einem der Ansprüche 1 bis 9 ausgelegt ist.

12. Zugführerberatungssystem (3) nach Anspruch 11, weiter umfassend mindestens eine der folgenden Einrichtungen:
ein Display zur Sichtanzeige der Fahrempfehlungen für den Führer des Zuges (1) und einen Lautsprecher zur hörbaren Bereitstellung der Fahrempfehlungen für den Führer des Zuges.

13. Zug (1) mit einem Zugführerberatungssystem (3) nach Anspruch 11 oder 12.

## Revendications

1. Procédé pour donner une recommandation de conduite au conducteur d'un train (1) pendant que le train fonctionne, la recommandation de conduite reposant sur une distance (D_{seg}) et un profil (32) d'altitude d'un segment d'itinéraire à couvrir par le train, une limite de temps de trajet pour le segment d'itinéraire et des limites (20) de vitesse le long du segment d'itinéraire,
dans lequel le procédé comprend les stades de :
définition d'un état (10) initial du train sur la base d'une position en cours du train et d'une vitesse en cours du train,
définition d'un état (12) cible du train sur la base d'une position cible et d'une vitesse cible à la fin du segment d'itinéraire à couvrir par le train,
détermination d'un profil (18) de vitesse optimisée en énergie entre l'état initial du train et l'état cible du train, le profil de vitesse optimisée en énergie étant déterminé par un algorithme d'optimisation reposant sur un graphique contraint par la limite de temps de trajet pour le segment d'itinéraire et les limites de vitesse le long du segment d'itinéraire, et
donner la recommandation de conduite au conducteur sur la base du profil de vitesse optimisée en énergie, dans lequel le stade de détermination du profil (18) de vitesse optimisée en énergie entre l'état (10) initial du train et l'état (12) cible du train par un algorithme d'optimisation reposant sur un graphique comprend :
définir un réseau d'états (14) intermédiaires entre l'état initial et l'état cible,
définir une pluralité de bords (16) de réseau entre l'état initial, le réseau d'états intermédiaires et l'état cible, la pluralité de bords de réseaux formant une pluralité de chemins de l'état initial à l'état cible en passant par le réseau d'états intermédiaires,
pour chacun de la pluralité de bords de réseaux, déterminer une consommation d'énergie du train et déterminer un temps de trajet requis du train le long du bord de réseau respectif, et
déterminer un chemin optimisé en énergie de l'état initial à l'état cible sur la base de la consommation d'énergie du train le long de la pluralité de bords de réseaux, le temps de trajet requis le long des bords du réseau du chemin optimisé en énergie étant compris dans la limite de temps de trajet, le réseau d'états (14) intermédiaires étant un réseau régulier d'états intermédiaires.

2. Procédé suivant la revendication 1, dans lequel la recommandation de conduite comprend au moins l'une de :
une recommandation de vitesse du train déduite du profil (18) de vitesse optimisée en énergie et de la position en cours du train, et
une recommandation d'accélération déduite du profil (18) de vitesse optimisée en énergie, de la vitesse en cours du train et de la position en cours du train, la recommandation d'accélération recommandant l'un d'une accélération, d'un freinage et d'un maintien de la vitesse du train.

3. Procédé suivant la revendication 1, dans lequel chacun des états (14) intermédiaires est défini par une valeur de distance respective et une valeur de vitesse de train respective ou dans lequel chacun des états intermédiaires est défini par une valeur de temps de trajet respectif et une valeur de vitesse de train respective.

4. Procédé suivant l'une quelconque des revendications 1 à 3, dans lequel la consommation d'énergie du train (1) et le temps de trajet requis du train le long de la pluralité de bords (16) de réseau sont déterminés suivant des caractéristiques de comportement dynamique du train, en prenant en compte en particulier les capacités d'accélération et de freinage du train.

5. Procédé suivant l'une quelconque des revendications 1 à 4, dans lequel le réseau d'états (14) intermédiaires est défini suivant des caractéristiques de comportement dynamique du train et/ou dans lequel la pluralité de bords (16) du réseau sont définis suivant des caractéristiques de comportement dynamique du train.

6. Procédé suivant l'une quelconque des revendications 1 à 5, dans lequel le stade de détermination d'un profil (18) de vitesse optimisée en énergie entre l'état (10) initial du train et l'état (12) cible du train est effectué d'une manière itérative, le réseau d'états intermédiaires d'une itération particulière ayant une résolution plus grande que le réseau d'états intermédiaires d'une itération précédente et le réseau d'états intermédiaires de l'itération particulière étant défini autour du chemin optimisé en énergie de l'itération précédente.

7. Procédé suivant l'une quelconque des revendications précédentes comprenant en outre le stade de :
filtrage passe-bas du profil (18) de vitesse optimisée en énergie, déterminé par l'algorithme d'optimisation reposant sur un graphique.

8. Procédé suivant l'une quelconque des revendications précédentes, dans lequel un algorithme d'optimisation reposant sur un graphique est l'un d'un algorithme CD*, d'un algorithme AD* et d'une succession d'un algorithme CD* et d'un algorithme AD* .

9. Procédé suivant l'une quelconque des revendications précédentes, effectué de manière répétée ou à intervalles réguliers et/ou en réaction à des instructions de démarrage respectives pour donner des recommandations de conduite mises à jour au conducteur du train en fonction du temps.

10. Procédé de fixation d'une vitesse d'un train en fonctionnement, comprenant :
donner une recommandation de conduite à un conducteur d'un train (1) par le procédé suivant l'une quelconque des revendications précédentes, et
permettre au conducteur du train de commander la vitesse du train sur la base de la recommandation de conduite.

11. Système (3) de conseil à un conducteur de train pour donner des recommandations de conduite à un conducteur d'un train (1), le système de conseil au conducteur d'un train comprenant :
une mémoire de mémorisation d'une distance et d'un profil d'altitude d'au moins un segment d'itinéraire, au moins une limite de temps de trajet pour le au moins un segment d'itinéraire et des limites de vitesse le long du au moins un segment d'itinéraire,
une entrée de signal de position pour recevoir des données de position indiquant la position du train à partir d'un système (5) de navigation par satellite, et
un module informatique couplé à la mémoire et à l'entrée du signal de position et configuré pour effectuer le procédé pour donner une recommandation de conduite suivant l'une quelconque des revendications 1 à 9.

12. Système (3) de conseil à un conducteur de train suivant la revendication 11, comportant en outre au moins l'un de :
un dispositif d'affichage pour fournir visuellement les recommandations de conduite au conducteur du train (1), et
un haut-parleur pour fournir de manière audible les recommandations de conduite au conducteur du train.

13. Train (1), comportant un système (3) de conseil de conducteur de train conformément aux revendications 11 ou 12.
